# EUROPEAN PATENT APPLICATION

(11) **EP 1 533 646 A1**
(43) Date of publication of application: **25.05.2005**
(21) Application number: 03405834.7
(22) Date of filing: 21.11.2003
(51) Int. Cl.: G02B 27/42, G02B 5/18

(54) **Optical pattern generating device**

(71) Applicant: Heptagon OY, 02150 Espoo (FI)
(72) Inventor: Kettunen, Ville, 8048 Zürich (CH); Rossi, Markus, 8645 Jona (CH)
(74) Representative: Walser, Peter

(57) **Abstract**

An device for generating, in an image plane, an optical pattern from light incoming from an incoming direction comprises a plurality of partial pattern generating, micro-optically structured sections (2.1) with different transversal positions. The structures are such that impinging light is deformed into a partial optical pattern at a distance from the device, so that the partial optical patterns generated by the different structures together form the optical pattern (3) in an image plane distance. The device may comprise a beam splitter (1) for splitting an incident light beam into a plurality of partial beams, each partial beam being directed to one of the sections. Both, the beam splitter and the micro-optically structured sections may be integrated in one single module, for example by being replicated on two sides of a transparent substrate (4).

## Description

### FIELD OF THE INVENTION

This invention relates to pattern generation from at least one incident light beam, for example laser beam, by micro-optical elements.

### BACKGROUND OF THE INVENTION

Pattern generation is one of the most important applications for diffractive optical elements (DOE). A typical diffractive pattern generator is an element that splits the incidence laser beam into a very high number of output beams. The intensities and directions of the beams are selected in such a manner that the desired pattern is formed. Hence the realized pattern consists of discrete individual spots. Alternatively, a pattern generator may also create a continuous pattern by mapping the input beam onto the desired output pattern via process called optical map-transform. Such elements are, however, in practice quite difficult to use.

The main thing limiting the use of diffractive pattern generators in cases where the required opening angles for the pattern are large is the fact that the minimum feature size of the element, i.e. size of the smallest significant detail on the element, scales down when the angle is increased. Consequently the complexity in the fabrication increases as the opening angle is increased. Typically opening angles more than 40 degrees are extremely challenging for modern fabrication techniques and often require trial-and-error type fabrication loops. However, wide-angle pattern generators are one of quite frequently encountered industrial applications.

### SUMMARY OF THE INVENTION

It is therefore an object of the invention to provide a pattern generator that overcomes drawbacks of prior art approaches and that is especially suited for creating wide-angle patterns without overly increasing fabrication complexity.

The invention is based on the idea that a wide-angle pattern is generated by a plurality of discrete micro-optical elements or element parts, each illuminated individually (or possibly all being illuminated by one strongly divergent beam), and each generating only a part of the desired pattern.

This results in an immediate relaxation of fabrication tolerances since each element only has to generate part of pattern, so they also have to open the incidence beam up by only a portion of the actual opening angle of the pattern and consequently the fabrication task is significantly simplified. In other words, the

To reduce the difficulty related to the fabrication of the original pattern generator but to still realize the desired pattern, a device for a single (or for relatively few) incident light beams may be provided. Such a device performs two separate optical functions. According to a preferred embodiment, a device is presented, which allows straightforward implementation of the above principle by first using a beam splitter to split an incident beam into a plurality, for example M x N individual beams (in the context of this application called 'partial beams') and then propagating each of the beams onto one of the (for example M x N) pattern generating sections located after the beam splitter, elements which may be a (physical) array of sections each being an individual element or a single element where the different optical functions are incorporated in separated sections of the element (a so called multi-aperture element). Of course, there may also be a plurality of individual elements with the pattern generating functionality, wherein at least one of them comprises more than one section. Each beam hits, subsequently to the beam splitting stage, one of the several (for example M x N) pattern generating sections. Each of these pattern generating sections is designed to produce a partial pattern, i.e. a specific part of the desired pattern, in such a way that the whole desired pattern is generated when the sections are simultaneously illuminated. The pattern generating sections themselves are either elements where the pattern is formed from high number of discrete spots or elements of the continuous pattern generating type, depending on the requirements of the underlying application, available fabrication methods etc. In the design of the individual pattern generating sections, the phase and direction of the illuminating beam, i.e. the given beam generated by the beam splitter and hitting a specific pattern generator, often must be taken into account, in order to correct for aberrations of the diffraction pattern, the profile depth of the diffractive optical element, etc.

This system may be miniaturized by realizing all elements as micro-optical (for example primarily diffractive optical) elements and combining the resulting diffractive surfaces on opposite sides of a substrate, thus creating the device as a single optical module that can be used to generate the whole desired wide-angle pattern.

Micro-optics, as compared to conventional optics, is based on fine structures causing refraction and/or diffraction, the structures having characteristic depths/heights and often also widths of typically a few micrometers (µm), for example of 0.2 µm - 200 µm or 0.5 µm - 200 µm, preferably of between 0.2 µm or 0.5 µm and about 50 µm, often between 0.5 µm and about 30 µm. In other words, the characteristic profile depths and the profile widths are of the order of a few wavelengths up to a few tens of wavelengths for refractive micro-optics and of about one wavelength up to a few wavelengths for diffractive optics. As a rule of thumb, micro-optical elements have structures such that the phase relation of radiation present at different neighboring places on the structure is well-defined. This is opposed to classical, purely refractive optical elements, where the behavior of the radiation at different elements of the structure can be described in a geometrical optics picture. Micro-optical elements, thus, as opposed to classical optical elements (such as classical lenses, mirror elements etc.) can be regarded as having structures which are such that the wave nature of the light has to be taken into account and participates in the effect the micro-optical element has upon radiation. Micro-optics in general is an extension to classical optics; the use of elements, the effect of which can be described by classical optics, in combination with the concept of this invention, is not excluded, as will become evident from an example further below.

Diffractive optical elements (DOEs) are an example of micro-optical elements; often micro-optical elements with primarily diffractive effect are called DOEs even if they also have some refractive effect. In the following description of embodiments, for the reason of simplicity the micro-optical structures are assumed to be diffractive optical structures (in the wide sense of the word), knowing that the principle of the invention is valid for beam shaping by any kind of micro-optical elements.

This invention relates to any form of micro-optical pattern generation. Especially, the invention relates to pattern generation out of discrete beams, to patterns generated by optical map transform or to any other pattern generation method by means of micro-optical elements.

### BRIEF DESCRIPTION OF THE DRAWINGS

In the following, embodiments of the invention are illustrated with reference to Drawings. In the drawings,
- Figure 1 shows a simplified schematic figure a device according to the invention.
- Figure 2 represents a scheme of a double sized diffractive optical element being a device according to the invention.
- Fig. 3. Schematically shows a further embodiment of the invention.
- Fig. 4 shows yet a further embodiment of the invention, suitable for being used with light source means generating a plurality of incidence beams.
- Fig. 5 shows an embodiment of the invention where not all pattern generating sections are in a common plane.

### DESCRIPTION OF THE PREFERRED EMBODIMENTS

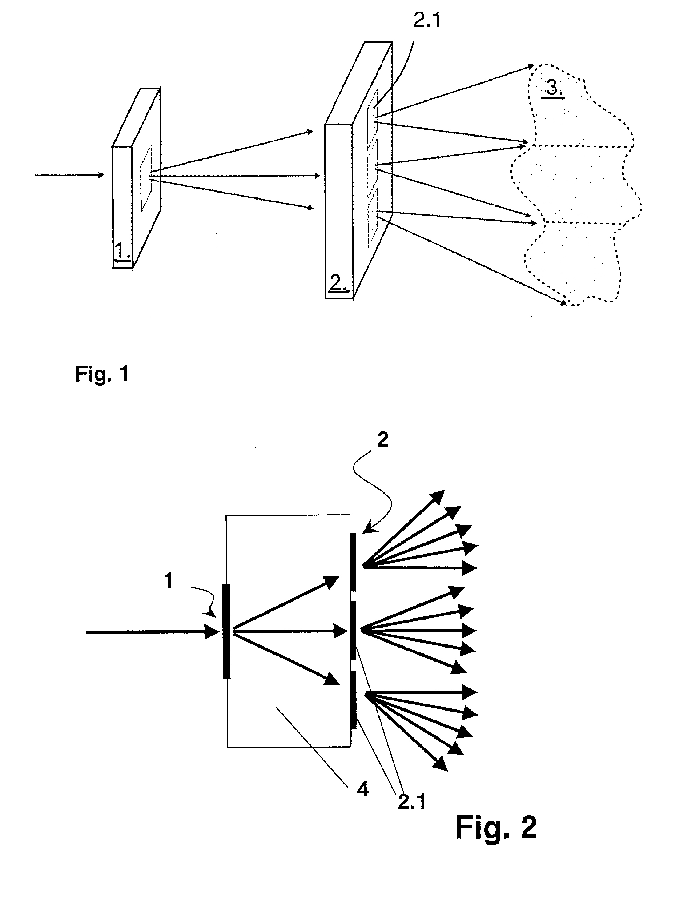

The device of **Figure 1** comprises a beam splitter 1 generating M x N partial beams and a beam shaping plate 2 with M x N separate sections 2.1, each generating a part of the actual pattern 3. In the drawing M=3, N=1; however, these numbers by be changed arbitrarily, and often N>1 will be preferred, so that the opening angle in both transversal directions may be large.

The device of Figure 1 may further comprise distance holding means (not shown in the figures) for fixing the beam splitter and the shaping plate to each other and for defining the distance between these two elements.

An entire optical system for generating an optical pattern the will further comprise light source means, for example a laser or a laser-like light source and possibly also a beam collimator, control means etc. (all not shown).

The beam splitter and the beam shaping element may both be transparent plates of any material suitable for carrying diffractive optical structures. For example, they may both be of a material, into which said structures can be replicated. Diffractive optical structures may be produced by various technologies, such as injection molding, roller hot embossing, flat-bed hot embossing, UV embossing (all these processes being replication processes) or lithography and etching processes, or by laser beam writing etc. Possible materials include glass, any sort of transparent plastics etc, for example UV curable epoxy.

The partial beam shaping sections may be of a kind the principle of which is already known. For example, they may be such that incident light is split into a very high number of output beams, the intensities and directions which are selected in such a manner that the desired pattern comprising discrete individual spots is formed. Alternatively, they may create a continuous pattern by mapping the input beam onto the desired output pattern the optical map-transform process. Since pattern generation as such has been known, details of the structure of the beam shaping sections are not further described here.

The sections 2.1 are drawn to be spaced and separated in the figure. However, they may be immediately adjacent to each other, a condition to be fulfilled often being that the neighboring incident partial beams do not overlap.

**Figure 2** schematically shows a further embodiment of the invention. The device shown in the figure is a double sided diffractive optical element implementing the functionality of a device shown in Figure 1 in one component (module). A transparent substrate 4 comprises a diffractive one to M x N beam splitter 1, a diffractive pattern generator with M x N separate sections 2 and the substrate 4. The beam splitter 1 and the diffractive pattern generating sections may be provided in separate layers attached to the substrate. As an alternative, one of them or both may be replicated directly onto the substrate via a replication process. In the drawing, again M=3 and N=1 despite the fact that any integer values for M≥1 and N≥1 (except M=N=1) may be chosen.

The drawing illustrates a basic idea underlying the invention: The sections 2.1 in the Figure are such that the partial patterns created by them are not all concentrated around the same angle (corresponding to an angle of incidence), but the central angle is varied systematically over a certain range given by the divergence of the partial beam with respect to each other, after having been split by the beam splitter.

The component of Fig. 2 may be fabricated e.g. by first mastering the individual surfaces (i.e. manufacturing a master comprising the structures or their negatives) of the beam splitter and the beam shaping (pattern generating) sections separately by whatever means necessary, and then combining them on the opposite sides of the substrate by means of suitable replication techniques. Finally, such a double-sided diffractive element can be mass-produced using standard replication techniques, for example UV replication.

The thickness of the substrate may be chosen dependent of its lateral dimensions, for example to be between 0.2 mm and 5 mm, or between 0.5 mm and 3 mm, if the lateral dimensions (height, width) of the entire plate are between 0.5 mm and a few centimeters, for example between 1 mm and 1 cm. The size of the individual sections depends, of course, on their number.

Preferably, the number of partial beams (corresponding to the value of M*N in the shown embodiments, though the sections need not be arranged in a rectangular M*N-pattern) will be greater or equal to 3, often it will exceed 7, for some applications it may be greater than or equal to 12, 16 or 20, 25, 30, 36 ...

A first, relatively simple example of a generated pattern is a stack of lines. Such a pattern may be generated by just designing the pattern generator elements on the second surface to be identical in terms of the pattern they generate.

In the above description the surfaces are assumed to be diffractive. For some applications, for example dealing with polychromatic light, it may be preferable to use surfaces combining both refractive and diffractive properties. Such surfaces may be either diffractive surfaces designed to correspond to phase shift of significantly more than 2pi (higher order diffractive surfaces with some refractive properties) or so called hybrid surfaces where the diffractive surface is e.g. curved to match the surface of a refractive lens with given properties.

In the above description, no assumption on the divergence of the incidence beam is made. In many cases, a collimated incident beam is preferred to a strongly diverging one and a focusing function onto an image plane is needed. For many light sources, such as laser diodes, this implies that a separate collimation / focusing lens is needed. To further miniaturize the required optics, it may be preferable in some cases to combine the collimation functionality to the pattern generating device. In such a case the device may comprise a single double sided optical component where the side closer to the light source has either a hybrid refractive/diffractive element with both collimation and beam splitting function or a lens array collimating and properly directing segments of the incidence beam towards the pattern generators on the other side of the component. A part or all of the collimation / focusing function can also be combined with the pattern generating stage (by the sections) of the device.

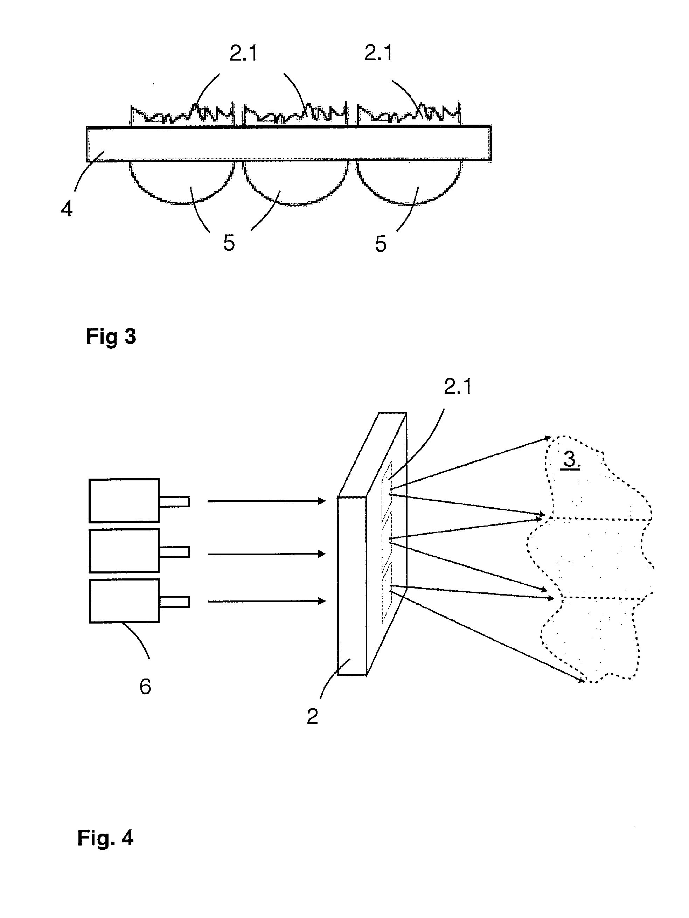

An example of such a device is schematically shown in Fig. 3. The double sided element comprises a plurality of lenses 5 adjacent to each other. Such a lens array contains a beam splitting functionality for a light beam which impinges on the entire surface of the lens array. The pattern generation element is segmented accordingly and thus comprises sections as previously described.

Instead of using a single light source the same principle of the invention also holds for an array of light sources, such as a VCSEL array 6, as very schematically shown in Fig. 4. The principle of the devices of Figs. 1, 2 or 3 can be applied for each light source separately, i.e. the beam splitter 1 will be illuminated already by an array of beams which will then be split further. As an alternative, each section of the beam shaper can be illuminated by one light source of the input array alone, as sketched in Fig. 4. In this case the beam splitter is not needed anymore. In order to generate a set of diffraction angles impinging on the pattern generator sections, either additional optical elements and / or tilted light sources can be used (not shown in the Figure).

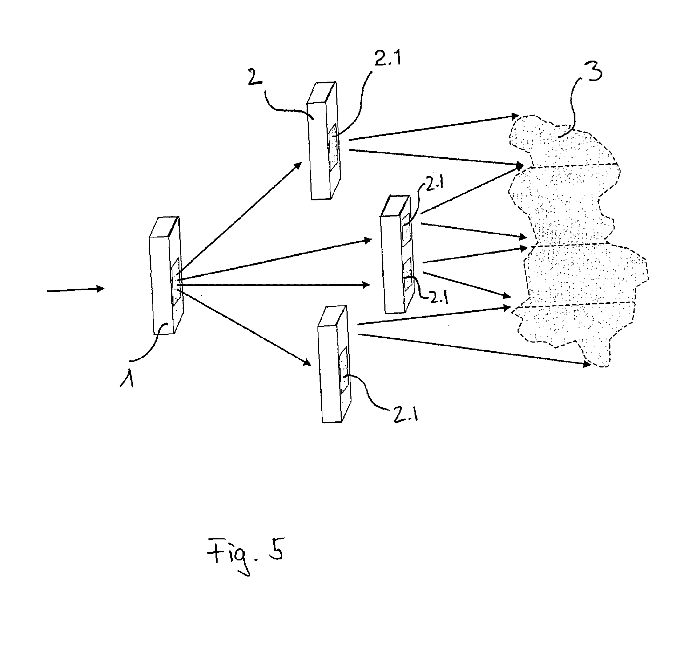

Fig. 5 represents an embodiment of the invention where not all pattern generating sections are formed on a single transparent plate. Instead, several plates are present, of which each can contain a single section or more than one sections. Also, not all sections need be arranged on the same plane rectangular to the optical axis of the device. Instead, they may be arranged in different planes, the only requirement being that they have different transversal positions. Also, there may be configurations (not shown in the figures), where the sections are not arranged in a direction essentially perpendicular to incoming light, but where light is incident from an oblique angle (off-axis configurations).

The image plane, onto which the pattern is projected, may be at a defined image plane distance to the device. In other configuration, the image plane distance does not have to be defined, and may be chosen freely (thus scaling the pattern size), since the pattern generating sections merely define angles of output radiation. This statement, of course, does not hold when imaging optical elements such as lenses are included in the pattern generator module.

In summary, a device for generating, in a (defined or variable) image plane, an optical pattern from light incoming from an incoming direction comprises a plurality of partial pattern generating, micro-optically structured sections with different transversal positions. The structures are such that impinging light is deformed into a partial optical pattern at a distance from the device, so that the partial optical patterns generated by the different structures together form the optical pattern in the image plane. The device may comprise a beam splitter for splitting an incident light beam into a plurality of partial beams, each partial beam being directed to one of the sections. Both, the beam splitter and the micro-optically structured sections may be integrated in one single module, for example by being replicated on two sides of a transparent substrate.

The invention further concerns a method of generating a pattern by providing a plurality of beams, directing each of them to one of a plurality of beam shaping sections such that each one is deformed into a partial optical pattern, the partial optical patterns generated by the different structures together forming the optical pattern.

The invention also concerns a method of manufacturing a device according to the invention comprising the steps of providing a transparent material in a liquid or plastically deformable state, replicating a micro-optical structure comprising a plurality of beam shaping sections into the material, and if necessary of hardening it.

This invention also concerns a replication tool or a master or sub-master comprising the multiple section micro-optical structure of the shaping plate, or a negative thereof, for replicating a plurality of sections into a device according to the invention.

Finally, the invention also concerns an optical system comprising the device.

## Claims

1. An device for generating, in an image plane, an optical pattern (3) from light incoming from an incoming direction, the device comprising a plurality of partial pattern generating sections (2.1) having different transversal positions, each section comprising a surface with micro-optical structures, the structures being such that impinging light is deformed into a partial optical pattern, the partial optical patterns generated by the different structures together forming the optical pattern.

2. The device according to claim 1, wherein the different sections are in a common plane.

3. The device according to claim 2, comprising a common body of the different sections, the common body being a transparent plate.

4. The device according to claim 3 further comprising a beam splitter (1) arranged upstream of the sections and being such that an incoming light beam impinging on the beam splitter is split into a plurality of partial beams, each partial beam being directed to one of the sections.

5. The device according to claim 4, wherein the beam splitter (1) comprises beam splitting micro-optical structures.

6. The device according to claim 4 or 5, wherein the beam splitter and the sections are arranged on two sides of a common substrate (4).

7. The device according to claim 6, wherein the substrate (4) is a transparent plate and is the common body, the beam splitter (1) and the sections (2.1) being formed by micro-optical structures replicated into the two large surfaces of the substrate.

8. The device according to claim 5, wherein the beam splitter comprises a second transparent plate, on which the beam splitting micro-optical structures are arranged, and wherein the transparent plate on which the sections are arranged and the second transparent plate are spaced from each other in a longitudinal direction and are fixed by holding means.

9. The device according to any one of the previous claims further comprising refractive and/or diffractive beam collimating and/or focusing means.

10. A method of generating an optical pattern using micro-optical structures, comprising the steps of providing a plurality beam shaping sections, of illuminating each one of them by an individual partial beam, and of thus deforming each individual partial beam into a partial optical pattern, the partial optical patterns generated by the different beam shaping sections together forming the optical pattern.

11. A method of manufacturing a micro-optical element for a device according to any one of claims 1-9 comprising the steps of providing a transparent material in a liquid or plastically deformable state, of replicating a micro-optical structure comprising a plurality of beam shaping sections structured such that they, upon being illuminated, create a partial optical pattern, into the material, and of hardening the transparent material.

12. A replication tool, a master or sub-master for a manufacturing process as claimed in claim 11, comprising a plurality of sections with micro-optical structures for being replicated onto a transparent plate, each one of the plurality of micro-optical structures, or a negative thereof, each one of the micro-optical structures being such that a partial optical pattern is formed upon illumination of the micro-optical structures, the partial optical patterns together forming an optical pattern.

13. An optical system comprising a device according to any one of the claims 1-9 and light source means operable to generate light impinging on the device.
